# EUROPEAN PATENT APPLICATION

(11) **EP 1 630 935 A2**
(43) Date of publication of application: **01.03.2006**
(21) Application number: 05006729.7
(22) Date of filing: 29.03.2005
(51) Int. Cl.: H02K 24/00

(54) **Variable-reluctance resolver and multi-resolver using same**

(30) Priority: 26.08.2004 JP 2004246878
(71) Applicant: MINEBEA Co., Ltd., Kitasaku-gun, Nagano-ken (JP)
(72) Inventor: Miya, Taichi, Omori-nishi Ota-ku Tokyo (JP); Koyama, Takanobu, Omori-nishi Ota-ku Tokyo (JP)
(74) Representative: Hoarton, Lloyd Douglas Charles

(57) **Abstract**

A VR resolver includes a stator yoke having a plurality of magnetic-pole portions; a rotor having a salient-pole portion; an excitation coil; and a plurality of output coils. The stator yoke and the rotor form an annular, hollow structure having a rectangular radial cross section. The excitation coil is provided in the hollow portion of the annular, hollow structure. The output coils are provided at the corresponding magnetic-pole portions of the stator yoke.

## Description

### BACKGROUND OF THE INVENTION

### Field of the Invention:

The present invention relates to a variable-reluctance (VR) resolver for detecting an angle of rotation of a rotating body and to a multi-resolver using the same.

### Description of the Related Art:

In a conventional resolver, an excitation winding and an output winding are wound in an overlying condition, resulting in a complex winding structure; and the magnitude of an output depends on the output winding linked with magnetic flux of the excitation winding. In order to increase the output of the excitation winding, the magnitude of excitation current or the number of windings must be increased. When the output windings are composed of sine output windings and cosine output windings, the winding structure becomes complex.

The excitation winding and the output winding (sine phase or cosine phase) are wound on the same magnetic pole of a stator. The output windings; for example, the sine output windings, are wound on the corresponding magnetic poles while being connected in series. Accordingly, the difference in effective magnetic flux arises among excitation windings in accordance with the difference in the degree of leakage magnetic-flux among the excitation windings. As a result, DC voltage (offset voltage) is superimposed on the output windings (sine phase or cosine phase) connected in series, resulting in impaired detection accuracy of the output windings. A remote cause for this problem is a failure to wind a large number of windings in the same coil shape and in an aligned manner.

When windings are wound in an overlying condition, the number of turns cannot be increased. Accordingly, the magnitude of the output of the excitation windings cannot be increased, resulting in a failure to increase the magnitude of the output of the output windings. Therefore, high output cannot be obtained.

A conceivable solution to the above problem is a resolver in which windings are arranged separately so as not to be wound in an overlying condition, as disclosed in, for example, Japanese Patent Application Laid-Open (*kokai*) No. 6-331306.

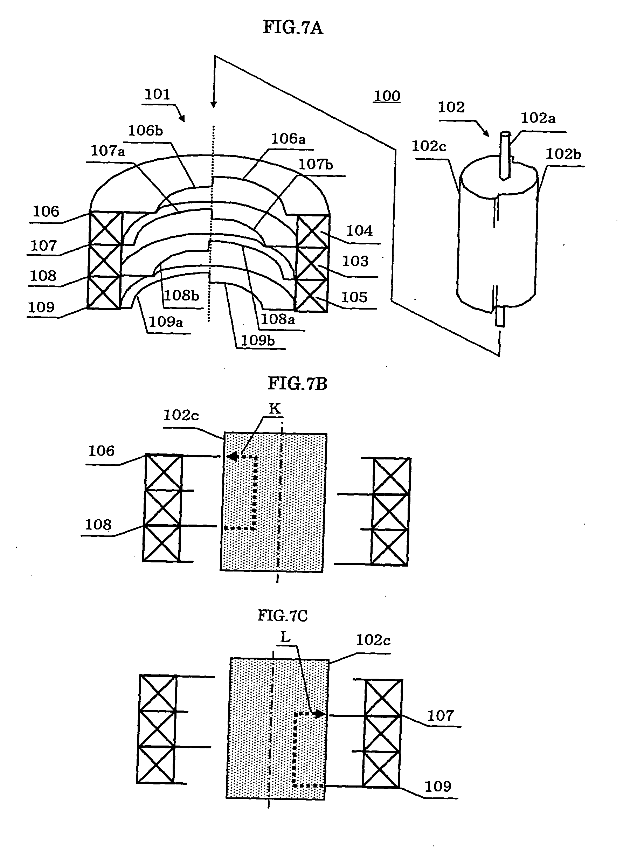

FIG. 7 is an explanatory view showing a conventional resolver in which windings are arranged separately.

FIG. 7A shows the configuration of the conventional resolver in which an excitation coil, or an excitation winding, and output coils, or output windings, are arranged separately so as not to be wound in an overlying condition.

The resolver of FIG. 7A includes a stator 101 and a rotor 102.

The stator 101 includes a single excitation coil 103; two detection coils 104 and 105 provided on corresponding opposite sides of the excitation coil 103; and four annular yokes 106 to 109 provided in such a manner as to sandwich the individual coils 103, 104, and 105 therebetween. The inner circumferences of the yokes 106 to 109 are smaller in diameter than those of the coils 103, 104, and 105, and thus project radially inward beyond the coils 103 to 105. The quantity of the radially inward projection beyond the coils 103 to 105 varies every half circumference as represented by large-diameter portions 106a to 109a and small-diameter portions 106b to 109b. The yokes 106 to 109 have the same inner circumference shape composed individually of the small-diameter portions 106b to 109b and the corresponding large-diameter portions 106a to 109a, but the orientation of the inner circumference shape about the axis differs by 180 degrees among the yokes 106 to 109 as viewed in this order. Each of the yokes 106 to 109 is formed from a magnetic plate.

The rotor 102 includes a rotary shaft 102a, and a body portion that is composed of a small-diameter portion 102b and a large-diameter portion 102c and whose cross section is composed of two semicircles of different diameters corresponding to the small- and large-diameter portions 102b and 102c.

The principle of an angle detection by the resolver of FIG. 7A will next be described with reference to FIGS. 7B and 7C.

FIG. 7B is a sectional view showing a magnetic path K in a state in which the large-diameter portion 102c of the rotor 102 faces the small-diameter portions 106b and 108b of the yokes 106 and 108, respectively. FIG. 7C is a sectional view showing a magnetic path L in a state in which the large-diameter portion 102c of the rotor 102 faces the small-diameter portions 107b and 109b of the yokes 107 and 109, respectively.

In the state of FIG. 7B, in which the large-diameter portion 102c of the rotor 102 faces the small-diameter portions 106b and 108b of the yokes 106 and 108, respectively, reluctance is minimized (the ratio "gap length/gap width" is minimized) with respect to the magnetic path that magnetically couples the excitation coil 103 and the detection coil 104. By contrast, reluctance is maximized with respect to the magnetic path that magnetically couples the excitation coil 103 and the detection coil 105. Accordingly, in this state, the excitation coil 103 and the detection coil 104 are of tight coupling, and the excitation coil 103 and the detection coil 105 are of loose coupling. Thus, the magnetic path K is formed as represented by a dotted-line arrow of FIG. 7B.

Meanwhile, when the rotor 102 makes a half turn from the state of FIG. 7B to the state of FIG. 7C, the above-mentioned reluctance relation is reversed. Specifically, the excitation coil 103 and the detection coil 105 are of tight coupling, and the excitation coil 103 and the detection coil 104 are of loose coupling. Thus, the magnetic path L is formed as represented by a dotted-line arrow of FIG. 7C. As mentioned above, the condition of magnetic coupling, loose or tight, between the excitation coil and the detection coil varies depending on the rotor rotation angle. Thus, detection voltage output from each of the detection coils 104 and 105 varies depending on the rotor rotation angle. From the two states of FIGS. 7B and 7C, two voltage patterns (angle dependence of detection voltage), which are shifted from each other by a rotor rotation angle corresponding to half a rotor rotation, are obtained.

The above-mentioned conventional resolver involves the following problems:
(1) In the example of FIG. 7, a combination of the profile of the stator 101 and the profile of the rotor 102 is changed in order to change between the magnetic path between the excitation coil 103 and the detection coil 104 and the magnetic path between the excitation coil 103 and the detection coil 105. Thus, each of the detection coils 104 and 105 is formed into an annular shape as is the excitation coil 103. For example, in the case of FIG. 7B, magnetic flux generated in the left half of the excitation coil 103 passes through the path "small-diameter portion 106b of yoke 106 → large-diameter portion 102c of rotor 102 → small-diameter portion 108b of yoke 108." However, a large portion of magnetic flux generated in the right half of the excitation coil 103 of FIG. 7B is not detected by the detection coil and becomes leakage magnetic-flux. Similarly, in the case of FIG. 7C, magnetic flux generated in the right half of the excitation coil 103 passes through the magnetic path of FIG. 7C; however, magnetic flux generated in the left half of the excitation coil 103 is not detected by the detection coil and becomes leakage magnetic-flux.
   Accordingly, magnetic flux generated in the excitation coil 103 is not effectively detected by the detection coils 104 and 105, resulting in very poor utilization efficiency.
(2) In order to obtain two kinds of detection voltage, four annular yokes 106 to 109 composed of the large-diameter portions 106a to 109a and the small-diameter portions 106b to 109b, respectively, must be aligned with each other with respect to the angular orientation of rotation. Enhancing the accuracy of positioning involves difficult work of fixing the yokes 106 to 109 to the coils.
(3) Since alignment work must be performed between the large-diameter portion 102c of the rotor 102 and the individual small-diameter portions 106b to 109b of the yokes 106 to 109, difficulty is involved in securing a gap between the rotor 102 and the yokes 106 to 109.
(4) Since the two detection coils 104 and 105 must be separately provided in such a manner as to sandwich the single excitation coil 103 therebetween, the number of components increases, and the structure becomes complex.

### SUMMARY OF THE INVENTION

In view of the above problems, an object of the present invention is to provide a VR resolver in which an excitation winding and an output winding are arranged separately in such a manner as not to be wound in an overlying condition at the same magnetic-pole position of a stator and which can produce high output through effective utilization of magnetic flux generated by an excitation coil, as well as a multi-resolver using the same.

To achieve the above object, the present invention provides a VR resolver configured such that, while an excitation coil and output coils are arranged separately such that the excitation coil and the respective output coils are not wound in an overlying condition at the same magnetic-pole position of a stator, magnetic flux generated by the excitation coil is led to the output coils arranged circumferentially, as well as a multi-resolver using the same.

The VR resolver of the present invention comprises a stator yoke having a plurality of magnetic-pole portions; a rotor having a salient-pole portion; an excitation coil; and a plurality of output coils. In the VR resolver, the stator yoke and the rotor form an annular, hollow structure having a rectangular radial cross section; the excitation coil is provided in the hollow portion of the annular, hollow structure; and the output coils are provided at the corresponding magnetic-pole portions of the stator yoke.

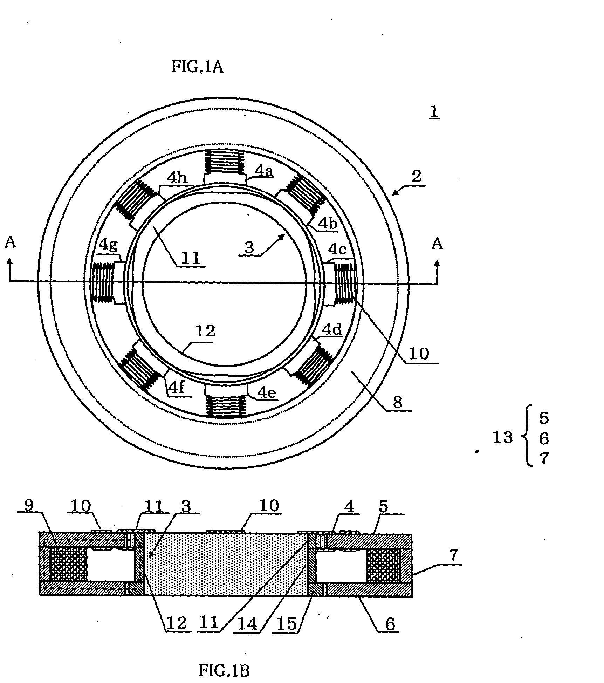

The hollow structure having a rectangular cross section premises that a gap is provided between the rotor and the stator so as to allow rotation of the rotor. Also, the hollow structure having a rectangular cross section premises that a hollow portion of the hollow structure serves as a magnetic path for magnetic flux generated by the excitation coil. No particular limitation is imposed on the hollow structure, so long as the function of the magnetic path is yielded. For example, the connection yoke of FIG. 1 may assume a semicircular cross section.

Specifically, to achieve the above object, the present invention provides a VR resolver and a multi-resolver as featured below.
(1) The VR resolver comprises a stator yoke having a plurality of magnetic-pole portions; a rotor having a salient-pole portion; an excitation coil; and a plurality of output coils. In the VR resolver, the stator yoke and the rotor form an annular, hollow structure having a rectangular radial cross section; the excitation coil is provided in the hollow portion of the annular, hollow structure; and the output coils are provided at the corresponding magnetic-pole portions of the stator yoke.
(2) Preferably, in the VR resolver described above in (1), the salient-pole portion of the rotor is located radially inward of the magnetic-pole portions of the stator yoke.
(3) Preferably, in the VR resolver described above in (1), the salient-pole portion of the rotor is located radially outward of the magnetic-pole portions of the stator yoke.
(4) The VR resolver comprises a stator yoke; an excitation coil; a plurality of output coils; and a rotor. The stator yoke comprises a first yoke, which comprises an annular plate portion, and a plurality of magnetic-pole portions protruding from the annular plate portion on the same plane as that of the annular plate portion; a second yoke comprising an annular plate portion; and a tubular connection yoke. In the VR resolver, the stator yoke and the rotor form an annular, hollow structure having a rectangular radial cross section; the stator yoke has a cross section shaped like a squarish letter U, which partially constitutes the rectangular cross section; the excitation coil is accommodated in a space associated with the cross section shaped like a squarish letter U; the output coils are provided at the corresponding magnetic-pole portions; and the rotor forms a magnetic path between the first yoke and the second yoke and has a salient-pole portion provided in opposition to the magnetic-pole portions of the stator yoke.
(5) The VR resolver comprises a stator yoke; a rotor; an excitation coil; and a plurality of output coils. The stator yoke comprises a stator-side annular plate portion; and a plurality of magnetic-pole portions protruding from the stator-side annular plate portion on the same plane as that of the stator-side annular plate portion. The rotor comprises a tubular portion; a salient-pole portion provided at a lower end of the tubular portion (one end of the tubular portion located at an axial position corresponding to that of the stator yoke); a rotor-side annular plate portion provided at an upper end of the tubular portion (the other end of the tubular portion); and an annular shaft portion provided at a radially inner end of the rotor-side annular plate portion. In the VR resolver, the rotor-side annular plate portion of the rotor, the shaft portion of the rotor, and the stator-side annular plate portion of the stator yoke form an annular, hollow structure having a rectangular radial cross section; the excitation coil is provided in the hollow portion of the annular, hollow structure; and the output coils are provided at the corresponding magnetic-pole portions of the stator yoke.
(6) The multi-resolver comprises a plurality of VR resolvers described above in (1) and is configured such that the stator yokes of the VR resolvers are sequentially connected, and the rotors of the VR resolvers are sequentially connected.
(7) In the multi-resolver described above in (6), the VR resolvers differ in the number of salient poles.

By virtue of the above features, the present invention can yield the following effects.

Employment of the annular, hollow structure allows the excitation coil and the output coils to be disposed at different positions. Thus, for example, the number of turns of the excitation coil and that of the output coils can be designed independently of each other. As a result, as compared with the case of the conventional arrangement of windings in an overlying condition, the excitation coil and the output coils can attain greater outputs.

Magnetic flux generated by the excitation coil passes through the magnetic path having a rectangular cross section. Thus, in contrast to the conventional resolver in which the magnetic path extends between adjacent magnetic poles, the VR resolver of the present invention can suppress generation of leakage magnetic-flux, thereby suppressing generation of offset voltage which would otherwise result from leakage magnetic-flux. Accordingly, the efficiency of detection by the output coils is improved, so that the magnitude of the output of the output coils can be increased.

In the case of the inner-rotor-type VR resolver of the present invention, a portion of the magnetic path whose cross section is shaped like a squarish letter U and partially constitutes the rectangular cross section of the magnetic path can be formed by solely the stator yoke. Thus, assembly work is facilitated. The work of completing the magnetic path by addition of the rotor is simple and easy.

In the case of the outer-rotor-type VR resolver of the present invention, the stator yoke and the rotor can be arranged within the height of the stator yoke that accommodates the excitation coil. Thus, a low-profile resolver can be formed.

In the case of the outer-rotor-type VR resolver, since the salient poles of the rotor are located radially outward of the magnetic-pole portions of the stator yoke, the diameter of the rotor as measured across the poles can be increased. Therefore, the shape of the sine wave (and the shape of the cosine wave) of the salient pole can be accurately formed in proportion to the diameter.

In the case of the outer-rotor-type VR resolver, an opening is formed in a central portion of the stator yoke, and an opening is formed, as needed, in a spacer and a wiring board. Thus, a rotary shaft (not shown) of the rotor can extend on either side of the RV resolver.

In the stator of the VR resolver of the present invention, the excitation coil is accommodated in a space associated with the cross section shaped like a squarish letter U; and the output coils are formed relatively thin. The rotor is formed in such a manner as to close the opening of the shape resembling a squarish letter U. Thus, the multi-resolver can be formed by means of superposing rotor-equipped stators on each other in the axial direction of a rotary shaft in an aligned condition.

The excitation coil is disposed in the space associated with the cross section of the stator yoke shaped like a squarish letter U, and the output coils are disposed at the corresponding magnetic-pole portions of the stator yoke and located separately from the excitation coil. Thus, the excitation coil and the output coils are not wound in an overlying condition, so that the number of turns of the excitation coil and that of the output coils can be set arbitrarily.

Since the space for accommodating the excitation coil can be modified in shape as appropriate by means of modifying the manner in which the stator yoke and the rotor are assembled, the output of the excitation coil can be set arbitrarily. Also, the output of the output coils can be set as appropriate by means of modifying the shape of the space and the number of turns of the excitation coil.

In the case of the conventional resolver, since a closed magnetic path must be formed for magnetic flux generated between adjacent magnetic pole portions, the orientation of windings must be adjusted, and a portion of the generated magnetic flux leaks between the adjacent magnetic poles without passing through the rotor, and thus fails to be effectively used. However, in the case of the present invention, magnetic flux generated by the flow of excitation current passes through the path "magnetic-pole portion of first yoke → salient-pole portion of rotor → magnetic-path formation portion of rotor → magnetic-flux transmission portion of rotor → second yoke." In contrast to the conventional case, since generated magnetic flux does not need to pass between adjacent magnetic poles, windings can be wound freely without need to consider orientation thereof, whereby leakage magnetic-flux can be reduced.

In the case of the outer-rotor-type VR resolver, since a bearing portion of the stator and a shaft portion of the rotor allow the rotor to be rotatably positioned in relation to the stator, a gap that induces reluctance can be accurately formed between the magnetic-pole portions and the salient-pole portion.

In the case where spacers are used to connect the RV resolvers, the spacers can be of a simple shape, so that the multi-resolver can be readily formed.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
FIG. 1A is a configurational plan view of an inner-rotor-type VR resolver according to a first embodiment of the present invention;
FIG. 1B is a sectional view taken along a line A―A of FIG. 1A;
FIG. 2A is a configurational plan view of a stator of the VR resolver of the first embodiment, showing a state in which coils are mounted;
FIG. 2B is a sectional view taken along a line C―C of FIG. 2A;
FIG. 2C is a perspective view of the stator of FIG. 2A, showing a state in which an excitation coil is removed;
FIG. 2D is a sectional view taken along a line E―E of FIG. 2C;
FIG. 3A is a plan view of a rotor of the VR resolver of the first embodiment;
FIG. 3B is a sectional view taken along a line F―F of FIG. 3A;
FIG. 3C is a side view viewed along a line G―G of FIG. 3A;
FIG. 4 is a sectional view taken along a line D―D of FIG. 2A;
FIG. 5A is a configurational plan view of an outer-rotor-type VR resolver according to a second embodiment of the present invention, showing a view along a line J―J of FIG. 5B;
FIG. 5B is a sectional view taken along a line H―H of FIG. 5A;
FIG. 6 is a sectional view of a duplex resolver according to a third embodiment of the present invention; and
FIGS. 7A to 7C are a series of explanatory views of a conventional resolver in which windings are arranged separately from each other.

### DESCRIPTION OF THE PREFERRED EMBODIMENTS

Embodiments of the present invention will next be described in detail with reference to the drawings.

### First Embodiment:

FIGS. 1 to 4 show an inner-rotor-type variable-reluctance (VR) resolver 1 according to a first embodiment of the present invention.

The inner-rotor-type VR resolver 1 of the first embodiment includes a stator yoke 13 having a plurality of magnetic-pole portions 4; a rotor 3 having a salient-pole portion 11; an excitation coil 9; and a plurality of output coils 10 provided at the magnetic-pole portions 4. The stator yoke 13 and the rotor 3 form an annular, hollow structure having a rectangular radial cross section. The excitation coil 9 is provided in the hollow portion of the annular, hollow structure. The output coils 10 are provided at the corresponding magnetic-pole portions 4 of the stator yoke 13, thereby forming a stator 2.

The excitation coil 9 and the respective output coils 10 are arranged in such a manner as not to overlap each other. Magnetic flux generated by the annular excitation coil 9 is caused to pass through magnetic poles provided on the stator yoke 13, to thereby be detected by the output coils 10 provided at the corresponding magnetic-pole portions 4.

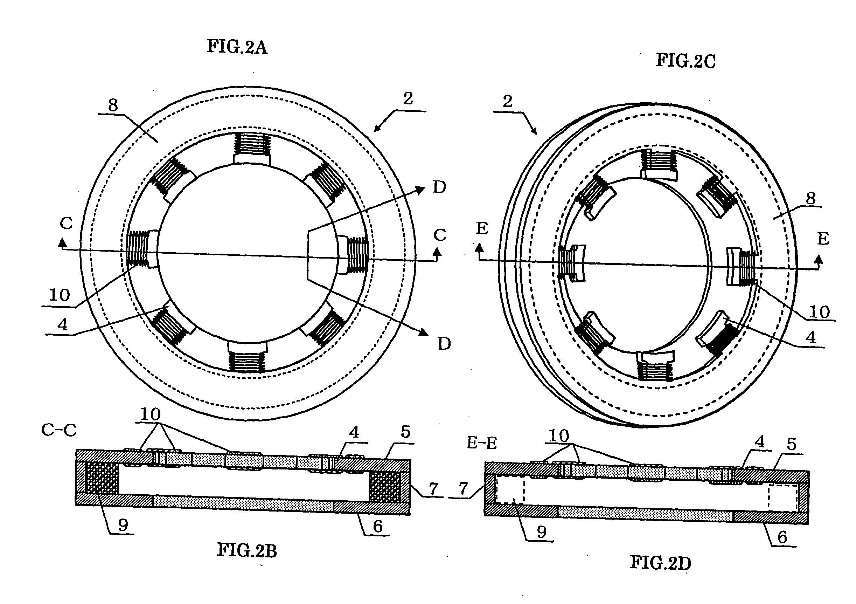

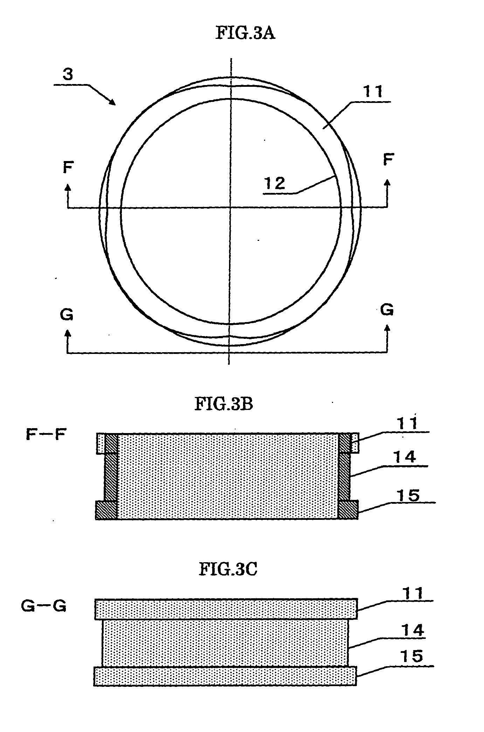

FIG. 1 shows the relation between the rotor 3 and the stator 2; FIG. 2 shows the stator 2 in a single piece; and FIG. 3 shows the rotor 3 in a single piece.

### (Stator Structure)

As shown in FIGS. 1 and 2, the stator 2 of the inner-rotor-type VR resolver 1 of the present embodiment includes the stator yoke 13 and various windings provided thereon.

The stator yoke 13 is formed from a magnetic material and includes a first yoke 5 having the plurality of magnetic-pole portions 4, a second yoke 6, and a connection yoke 7 for connecting the first yoke 5 and the second yoke 6.

The first yoke 5 is formed from a single magnetic plate and includes an annular plate portion 8, and the magnetic-pole portions 4 protruding radially inward from the annular plate portion 8. The number of the magnetic-pole portions 4 is determined in accordance with the number of salient poles at the salient-pole portion 11, which will be described later, provided on the rotor 3.

The plate thickness (thickness in the axial direction) of the first yoke 5 is set arbitrarily, but is preferably determined in relation to magnetic flux generated by the excitation coil. The plate width (thickness in the radial direction) of the first yoke 5 may be set equal to or greater than the total width of the width of the excitation coil 9 and the width of the connection yoke 7. In view of effective utilization of magnetic flux generated by the excitation coil 9, preferably, the magnetic-pole portions 4 are arranged in such a manner as to be equally spaced along the inner circumference of the annular plate portion 8.

The second yoke 6 is formed into an annular shape from a magnetic plate having an arbitrary thickness and an arbitrary width and is preferably formed into the form of an annular plate having the same thickness and the same width as the first yoke 5.

The connection yoke 7 is formed into a tubular shape from a magnetic plate having an arbitrary thickness. The connection yoke 7 is provided in such a manner that the outer circumferential surface thereof is aligned with those of the first and second yokes 5 and 6. The connection yoke 7 can be formed integrally with the first yoke 5 or the second yoke 6.

An assembly of the first yoke 5, the second yoke 6, and the connection yoke 7 has a cross section shaped like opposed squarish letters U. In other words, half of the assembly of the first yoke 5, the second yoke 6, and the connection yoke 7 has a cross section shaped like a squarish letter U. Furthermore, an assembly of the first yoke 5, the second yoke 6, the connection yoke 7, and the rotor 3, which will be described later, assumes the form of an annular, hollow structure having a rectangular radial cross section. In other words, half of the assembly of the first yoke 5, the second yoke 6, and the connection yoke 7 has a cross section shaped like a squarish letter U, which partially constitutes the rectangular cross section.

The excitation coil 9 assumes the form of resin-molded winding or resin-molded winding on a coil bobbin.

The excitation coil 9 is accommodated in a space shaped like a squarish letter U and defined by the first yoke 5, the connection yoke 7, and the second yoke 6.

The output coils 10 are formed by winding respective windings on the corresponding magnetic-pole portions 4 of the first yoke 5.

The output coils 10 are composed of sine output coils, or sine output windings, and cosine output coils, or cosine output windings.

The sine output windings and the cosine output windings are formed in such a manner as to have an electrical angle of 90 degrees as a phase difference therebetween. As shown in FIG. 1A, in the case where the rotor 3 has four salient poles, the sine output windings are respectively formed at, for example, magnetic-pole portions 4a, 4c, 4e, and 4g by an arbitrary winding method, preferably, in series winding.

The cosine output windings are respectively formed at, for example, magnetic-pole portions 4b, 4d, 4f, and 4h by an arbitrary winding method, preferably, in series winding.

### (Rotor Structure)

The rotor 3 of FIG. 3 is formed from a magnetic material; has, in the present embodiment, four salient poles; and has an opening portion 12 of large diameter formed at the center thereof. An unillustrated shaft or the shaft of a mating equipment is fixedly fitted into the opening portion 12. The rotor 3 is formed in such a manner that the annular salient-pole portion 11 having four equally-spaced salient poles formed along its circumference, a cylindrical magnetic-path formation portion 14, and an annular magnetic-flux transmission portion 15 are connected or integrated in the axial direction. The outside diameter of the salient-pole portion 11 is set greater than that of the magnetic-path formation portion 14 so as to change reluctance as follows: magnetic flux that has passed through the magnetic poles of the first yoke 5 passes mainly through the salient-pole portion 11 without leakage to the magnetic-path formation portion 14.

The salient-pole portion 11, the cylindrical magnetic-path formation portion 14, and the annular magnetic-flux transmission portion 15 have the same inside diameter for reception of a shaft (not shown).

The outside diameter of the salient-pole portion 11 is set such that a reluctance characteristic associated with a gap between the salient-pole portion 11 and the magnetic poles of the first yoke 5 varies in the form of a sine wave. The outside diameter of the magnetic-flux transmission portion 15 is set in accordance with the inside diameter of the second yoke 6. The outside diameter of the salient-pole portion 11 and that of the magnetic-flux transmission portion 15 may be set differently from each other.

### (Formation of Magnetic Path)

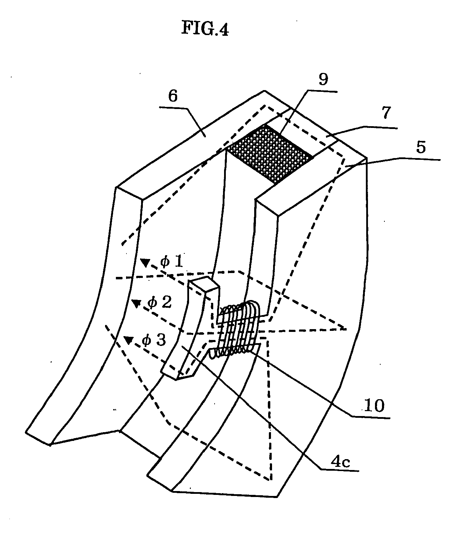

As shown in FIG. 2, when excitation current flows through the excitation coil 9, magnetic flux is generated on a plane perpendicular to the longitudinal direction of the excitation coil 9. Magnetic flux is formed along a path of least reluctance. FIG. 4 shows magnetic paths for magnetic flux generated at various portions of the excitation coil 9.

As is apparent from FIG. 4, magnetic flux generated at portions of the excitation coil 9 corresponding to the magnetic-pole portions 4 (e.g., 4c) effectively converges at the magnetic-pole portions 4, thereby forming magnetic paths.

Therefore, magnetic flux generated by the excitation coil 9 effectively passes through the magnetic-pole portions 4 at all times. As a result, generation of offset voltage is suppressed, so that the output coils 10 (sine output windings or cosine output windings) provided at the corresponding magnetic-pole portions 4 output an accurate detection output of large magnitude at all times.

### Second Embodiment:

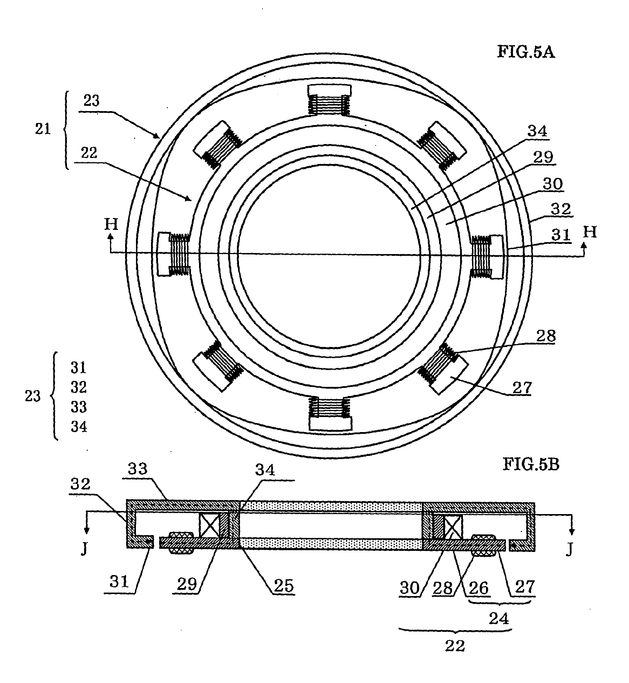

FIG. 5 shows an outer-rotor-type VR resolver 21 according to a second embodiment of the present invention. The outer-rotor-type VR resolver 21 includes a stator 22 and a rotor 23.

The stator 22 is formed from a magnetic material and includes a stator yoke 24 and coils provided on the stator yoke 24.

The stator yoke 24 having magnetic-pole portions 27, and the rotor 23 having a salient-pole portion 31 form an annular, hollow structure having a rectangular radial cross section; an excitation coil 30 is provided in the hollow portion of the annular, hollow structure; and output coils 28 are provided at the corresponding magnetic-pole portions 27 of the stator yoke 24.

The stator yoke 24 includes a stator-side annular plate portion 26 having an opening portion 25 formed at its central portion; a plurality of magnetic-pole portions 27 protruding radially outward from the outer circumference of the stator-side annular plate portion 26; and a bearing portion 29 provided perpendicularly to the surface of the stator-side annular plate portion 26 in the vicinity of the inner circumference of the stator-side annular plate portion 26.

The coils provided on the stator yoke 24 assume the form of output coils 28 wound on the corresponding magnetic-pole portion 27.

The bearing portion 29 is formed cylindrically. The excitation coil 30 is disposed in contact with the outer cylindrical surface of the bearing portion 29. The bearing portion 29 has an axial height equal to or greater than that of the excitation coil 30 so as to prevent the excitation coil 30 from coming into contact with the rotating rotor 23. The bearing portion 29 is formed from a slide-bearing material so as to exhibit a good sliding characteristic.

The output coils 28 are of sine output winding or cosine output winding. In order to generate sine output voltage or cosine output voltage, the sine output windings are wound in series, and the cosine output windings are wound in series.

The rotor 23 is formed from a magnetic material and includes the salient-pole portion 31, a cylindrical portion 32, a rotor-side annular plate portion 33, and a shaft portion 34. The thickness of the salient-pole portion 31 is set substantially equal to that of the stator yoke 24, to thereby reduce reluctance.

The shape of the salient-pole portion 31 is determined such that a reluctance characteristic associated with a gap between the salient-pole portion 31 and the magnetic poles of the stator yoke 24 varies in the form of a sine wave as the rotor 23 rotates.

The shaft portion 34 is formed cylindrically and provided perpendicularly to the surface of the rotor-side annular plate portion 33. The shaft portion 34 has an axial height greater than that of the bearing portion 29.

In assembly, the output coils 28 are mounted on the corresponding magnetic poles; the stator yoke 24 is prepared with the excitation coil 30 disposed around the bearing portion 29; and the shaft portion 34 of the rotor 23 is coaxially fitted into the bearing portion 29 of the stator yoke 24 in a rotatable condition.

As represented by the dotted-line arrow of FIG. 5B, there is formed the magnetic path "stator yoke 24 → shaft portion 34 (and/or bearing portion 29) → rotor-side annular plate portion 33 → tubular portion 32 of rotor 23 → salient-pole portion 31 of rotor 23 → magnetic-pole portions 27 of stator yoke 24 → output coils 28."

### Third Embodiment:

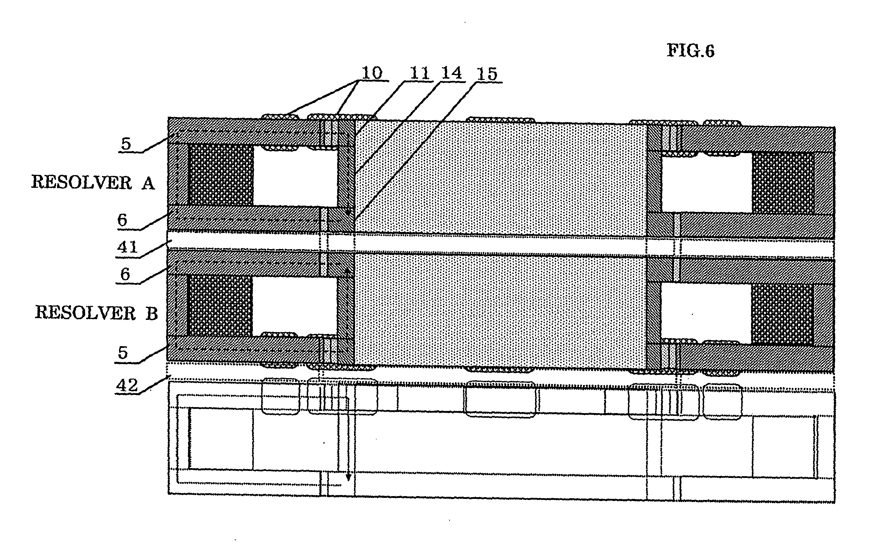

A third embodiment of the present invention is a multi-resolver in which a plurality of VR resolvers according to the first or second embodiment are connected so as to serve as a single resolver. The stator yokes of the VR resolvers are sequentially connected, while the rotors of the VR resolvers are sequentially connected, thereby yielding the multi-resolver. FIG. 6 shows a duplex resolver and how to form a multi-resolver by use of the duplex resolvers.

In the duplex resolver of FIG. 6, two inner-rotor-type VR resolvers of the first embodiment are connected in the axial direction, while their output coils 10 are located axially outward. In connection, the VR resolvers are connected either directly or via a spacer 41 represented by a dotted line of FIG. 6. The spacer 41 is of a sheet of a nonmagnetic material. In the case of direct connection, the stator yokes or rotors of the VR resolvers are connected. In the case of connection via the spacer 41, the stator yokes are connected via the spacer 41, while the rotors are connected via the spacer 41.

As shown in FIG. 6, by use of modified spacers 42, each of which has recesses for receiving the corresponding output coils 10 so as to prevent deformation thereof, a plurality of duplex resolvers of FIG. 6 can be connected, thereby yielding a multi-resolver in which a desired number of VR resolvers are connected.

Similarly, by use of a plurality of outer-rotor-type VR resolvers of the second embodiment shown in FIG. 5, a multi-resolver can be formed. Specifically, two outer-rotor-type VR resolvers of the second embodiment are connected in the axial direction, while their output coils 28 are located axially inward. In connection, the two rotors 23 are connected, while the two stator yokes 24 are connected via the modified spacer 42, which has recesses for receiving the corresponding output coils 28 so as to prevent deformation thereof, thereby yielding a duplex resolver. A plurality of the thus-formed duplex resolvers are connected, thereby yielding a multi-resolver.

### Fourth Embodiment:

The above embodiments are described while mentioning the stator having eight equally spaced magnetic poles, and the rotor having four equally spaced salient poles. However, the present invention is not limited thereto. The number of the magnetic poles of the stator, the number of the salient poles of the rotor, and arrangement intervals of the magnetic poles and salient poles can be set arbitrarily, so long as a sine wave output is produced by adjusting, for example, the number of turns of the coil windings.

The above embodiments are described while mentioning the excitation coil having a rectangular cross section. However, the present invention is not limited thereto. The excitation coil may have a cross section in another shape, such as a circular cross section. In this case, the stator yoke has a semicircular cross section.

In manufacture of the stator and the rotor, their portions may be formed integrally or separately in accordance with convenience of manufacture.

The multi-resolver of the third embodiment may be formed by combining RV resolvers that differ in the number of salient poles.

The output coils can be led out for external connection via a wiring board (not shown). The wiring board may have an opening formed therein in correspondence with the opening portion of the stator yoke. The wiring board is attached to the lower surface of the stator yoke, if necessary, via a spacer (not shown). The spacer may have an opening formed therein in correspondence with the opening portion of the stator yoke. The height of the spacer is greater than the height of the coils that are wound on the corresponding magnetic poles and protrude from the lower surface of the stator yoke.

The configurations of the above embodiments may be mutually applicable so long as redundant use of functions is not involved.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A VR resolver comprising:
a stator yoke having a plurality of magnetic-pole portions;
a rotor having a salient-pole portion;
an excitation coil; and
a plurality of output coils;
wherein the stator yoke and the rotor form an annular, hollow structure having a rectangular radial cross section; the excitation coil is provided in the hollow portion of the annular, hollow structure; and the output coils are provided at the corresponding magnetic-pole portions of the stator yoke.

2. A VR resolver according to claim 1, wherein the salient-pole portion of the rotor is located radially inward of the magnetic-pole portions of the stator yoke.

3. A VR resolver according to claim 1, wherein the salient-pole portion of the rotor is located radially outward of the magnetic-pole portions of the stator yoke.

4. A VR resolver comprising:
a stator yoke comprising:
a first yoke comprising an annular plate portion, and a plurality of magnetic-pole portions protruding from the annular plate portion on the same plane as that of the annular plate portion;
a second yoke comprising an annular plate portion; and
a tubular connection yoke;
a rotor;
an excitation coil; and
a plurality of output coils;
wherein the stator yoke and the rotor form an annular, hollow structure having a rectangular radial cross section; and the stator yoke has a cross section shaped like a squarish letter U, which partially constitutes the rectangular cross section;
the excitation coil is accommodated in a space associated with the cross section shaped like a squarish letter U;
the output coils are provided at the corresponding magnetic-pole portions; and
the rotor forms a magnetic path between the first yoke and the second yoke and has a salient-pole portion provided in opposition to the magnetic-pole portions of the stator yoke.

5. A VR resolver comprising:
a stator yoke comprising:
a stator-side annular plate portion; and
a plurality of magnetic-pole portions protruding from the stator-side annular plate portion on the same plane as that of the stator-side
annular plate portion;
a rotor comprising:
a tubular portion;
a salient-pole portion provided at one end of the tubular portion, the end being located at an axial position corresponding to that of the stator yoke;
a rotor-side annular plate portion provided at the other end of the tubular portion; and
an annular shaft portion provided at a radially inner end of the rotor-side annular plate portion;
an excitation coil; and
a plurality of output coils;
wherein the rotor-side annular plate portion of the rotor, the shaft portion of the rotor, and the stator-side annular plate portion of the stator yoke form an annular, hollow structure having a rectangular radial cross section;
the excitation coil is provided in the hollow portion of the annular, hollow structure; and
the output coils are provided at the corresponding magnetic-pole portions of the stator yoke.

6. A multi-resolver comprising a plurality of VR resolvers according to claim 1, stator yokes of the VR resolvers being sequentially connected, and rotors of the VR resolvers being sequentially connected.

7. A multi-resolver according to claim 6, wherein the VR resolvers differ in the number of salient poles.
